# EUROPEAN PATENT APPLICATION

(11) **EP 1 958 793 A1**
(43) Date of publication of application: **20.08.2008**
(21) Application number: 06256155.0
(22) Date of filing: 01.12.2006
(51) Int. Cl.: B60B 9/26, B60B 19/04

(54) **Vehicle wheel**

(71) Applicant: The Royal College of Art, London SW7 2EU (GB); Rodrigues, Osmar Vincente, Kensington Gore London SW7 2EU (GB)
(72) Inventor: The designation of the inventor has not yet been filed
(74) Representative: Hedley, Nicholas James Matthew

(57) **Abstract**

A variable diameter/width wheel for a vehicle is provided that has an axis of rotation and comprising:
a rim,
a hub configured for attachment to an axle or shaft, the hub comprising a first part (20) and a second part (22) that arc both arranged on the said rotational axis, and
arching members (7) having first and second ends and being connected at the first end to the first hub part and at the second end to the second hub part, so that the arching members extend outwardly in an arc between the first and second hub members and form or support the wheel rim,

The first and second hub parts (20,22) can be moved towards or away from each other to change the shape of the arc of the arching members (7) and the two hub parts are lockable in a fixed position relative to each other to maintain a given arc shape.

Moving the hub parts (20,22) towards each other makes the arc shape of the arching members taller and thinner, thereby increasing the diameter of the wheel and decreasing its width while moving the hub parts (20,22) away from each other makes the arc shape shorter and wider, thereby decreasing the diameter of the wheel and increasing its width.

## Description

### Technical Background

The present invention relates to a vehicle wheel having a variable diameter and width.

### Background Art

The provision of a wheel for a vehicle having a variable diameter is known. For example, US-A-3802743 describes a variable diameter wheel having a rim made up of individual segments. Each segment is supported by a piston that can be moved from a retracted position, where the wheel diameter is small, to an extended position, where the wheel diameter is large. This arrangement is used to allow vehicles to traverse the contours of a steep hill without tilting or tipping by making the wheel higher up the hill small and the wheel further down the hill large.

EP-A-0665128 describes a vehicle wheel having a number of sliders that can be extended by means of hydraulic pressure to increase the outer diameter of the wheel.

US-2004036347 describes a vehicle having a number of tyres, each having different road gripping characteristics. A desired tyre is selected by inflating it so that it has a larger diameter than the other tyres and therefore engages the road in preference to the other tyres.

### Disclosure of Invention

The present invention provides a wheel of variable diameter which, in addition to changing its diameter, can also change its width, thereby increasing the area of the wheel that engages the ground. Thus, the wheel of the present invention can be adjusted to increase a vehicle's performance according to the terrain over which it is travelling. For example, on a hard surface, a large diameter wheel with a low footprint area (i.e. area where the wheel and ground are in contact) can be used whereas on soft, yielding ground, a smaller diameter wheel with a larger width can be provided that has a larger footprint area and will prevent the wheel from sinking into the ground.

In accordance with the present invention there is provided a variable diameter and width wheel for a vehicle, the wheel having an axis of rotation and comprising:
a rim,
a hub configured for attachment to an axle or shaft, the hub comprising a first part and a second part that are both arranged on the said rotational axis, and
at least one arching member having first and second ends and being connected at the first end to the first hub part and at the second end to the second hub part, wherein the arching member extends outwardly in an arc between the first and second hub members and forms or supports the wheel rim,
wherein the first and second hub parts can be moved relative to each other to change the shape of the arc of the at least one arching member, and wherein the two hub parts are lockable in a fixed position relative to each other.

The term "arc" is not used in its strict mathematical sense (i.e. part of the circumference of a circle) but in its wider sense to mean an arch or curve.

The at least one arching members may be made up of a plurality of flexible hoops spaced radially around the hub and extending radially outward from the hub. Alternatively the at least one arching member may be a hollow annular flexible tyre having a central opening defined by two internal rims. These rims form the said two ends of the arching member that are connected to the first and second hub parts so that, as the two hub parts are moved relative to each other, the width and diameter of the tyre will change.

If the arched member(s) do not prevent material, e.g. soil, mud, water etc, penetrating into the interior of the wheel, as is the case when the arched members are hoops, an outer covering may be provided that overlies the arched member(s) and that is deformable to adopt the shape outlined by the arched member(s). The outer covering may be sealed to form a pneumatic cushion for the vehicle but generally the pressure inside the cover will be low so that contact is maintained between the arched members and the covering.

Likewise, when the arched member is in the form of a tyre, the tyre can be pneumatically inflated, e.g. by including an inner tube within the tyre or by sealing a cavity within the tyre.

As mentioned, the first and second hub parts are movable with respect to each other and the direction of relative movement is, in one embodiment, along the said axis of rotation of the wheel. To this end, at least one of the hub parts may be movable along a rod that lies on the rotational axis. This movement can be achieved in a number of ways, e.g. by means of a pneumatic or hydraulic ram or by providing the rod with a screw thread that is engaged by the movable hub part so that the movable hub part may be driven along the rod by turning the rod, e.g. with the aid of a motor.

In one embodiment, only one of the hub parts is movable while the other is in a fixed location.

The present invention also provides a vehicle provided with one or more wheels as described above.

The primary use of the wheel of the present invention is for off road vehicles, for example agricultural vehicles, where changing under-wheel conditions may be encountered and where it is important that the wheels should not sink into the ground or compact the soil more than necessary and where the wheels can often slip in muddy conditions. The wheel may be used both on vehicles that are self-propelled or those that are not. However, the wheel can also be used for on-road vehicles as well.

### Detailed Description of Drawings

There will now be described, by way of example only, a wheel in accordance with the present invention, by reference to the accompanying drawings in which:
Figure 1 is an exploded view of a wheel in accordance with the present invention;
Figure 2 is a side elevation of the wheel of Figure 1;
Figure 3 is an end view of the wheel of Figures 1 and 2;
Figure 4 is a perspective view of the wheel of Figures 1 to 3;
Figures 5 to 7 are perspective views of various parts of the wheel shown in Figure 4;
Figure 8 is a perspective view of part of a wheel in accordance with the present invention suitable for use on water to provide buoyancy to a vehicle and also to provide additional support and extra load-carrying capacity;
Figure 9 is a side elevation of the wheel in accordance with the present invention and is similar to that of Figure 4 but incorporates a floatation bladder as shown in Figure 8;
Figure 10a is a side elevation and Figure 10b is a perspective view of the wheel of Figure 4 but including a cover for use on water or even moisturized mud to provide higher level of flotation and buoyancy to a vehicle;
Figure 11(a) to (c) are photographs showing the wheel of Figures 1 to 10 in a large diameter/narrow configuration (Figure 11(a)), in a small diameter/wide configuration (Figure 11(c)) and in an intermediate configuration (Figure 11(b));
Figure 12 is a sectional view through a rim of a wheel in accordance with the present invention; and
Figure 13 is a view of the hub art of the wheel.

### Detail description of the best mode of putting the invention into operation

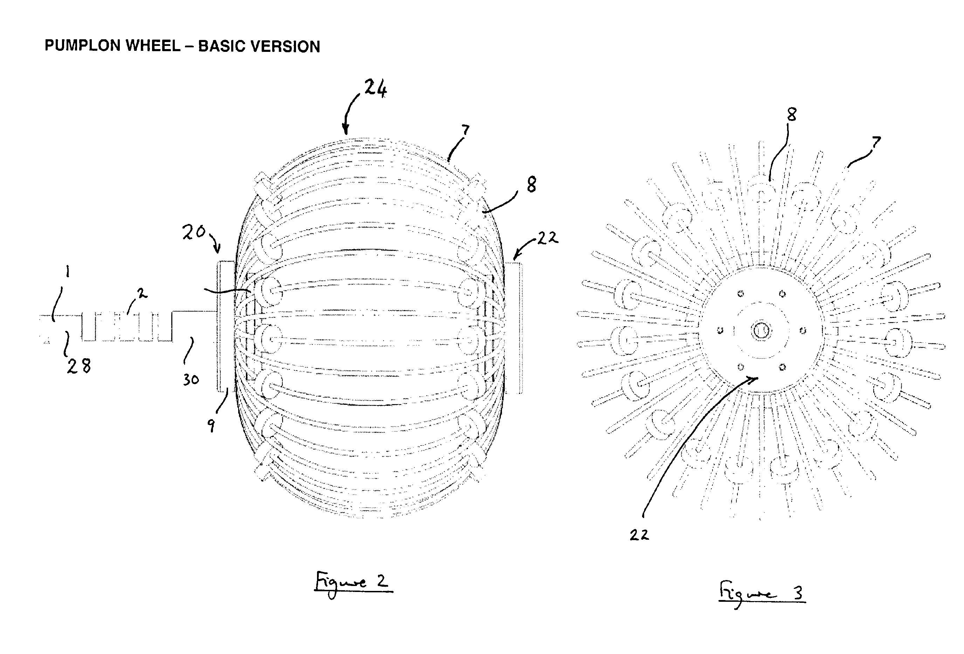

Referring initially to Figure 2, there is shown a wheel in accordance with the present invention that has a cage 24 composed of thirty eight equi-spaced, radially extending hoops 7 that arch between a first hub part 20 and a second hub part 22. A rod 1 extends through the first hub part 20 into the second hub part 22. The hoops are made of helical steel springs steel filled by wire rope obtained by cutting the spring to the desired length and threading a section of wire rope with the same length and internal diameter as the spring through the centre of the spring. However, the hoops may be made of any material that is strong, stiff and resilient enough to support the loads imposed on the wheels, while also being flexible to allow the diameter of the wheel to be changed as discussed below.

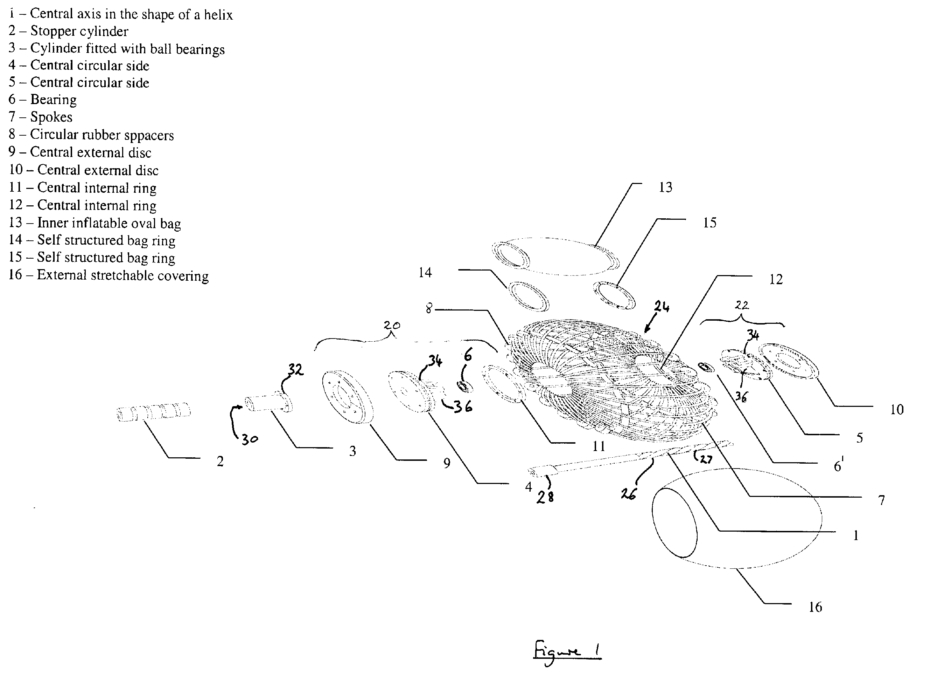

The component parts of the wheel will be described in further details with reference to Figures 1 to 11 and 13. From these drawings, it can be seen that the rod 1 extends along the rotary axis of the cage 24 of hoops.

The rod 1 includes a section 26 at one end of the rod that incorporates a pair of helical grooves 27; the rod also includes a stop section 28 at the opposite end of the rod to the helical grooves 27.

The wheel is constructed on the rod 1 and, starting from the left hand side of the rod as seen in Figures 1 and 2, there is a spacer cylinder 2, which is made of metal, e.g. steel, or of a strong plastic material, for example PPS (poly(p-phenylene sulfide), POM (polyoxymethylene) or a metallic polymer alloy, e.g. a pure iron powder uniformly dispersed in a insulating plastic binder. The spacer cylinder 2 abuts the stop section 28 of the rod and limits the longitudinal movement of a cylinder 3, which has a central bore 30 that fits on the helical section 26 of the rod 1. Within the bore 30, there are provided a number of ball bearings that stand proud of the bore 30 and that are configured to run in the helical grooves 27 of section 26. Accordingly, when the rod 1 is twisted about its central axis, the cylinder 3 moves axially along the rod 1 either towards the stop 28 or away from the stop, depending on the direction in which the rod is turned. The cylinder 3 may conveniently be composed of plastic, e.g. PPS, POM or metallic polymer alloy although it can also be made of metal, for example steel.

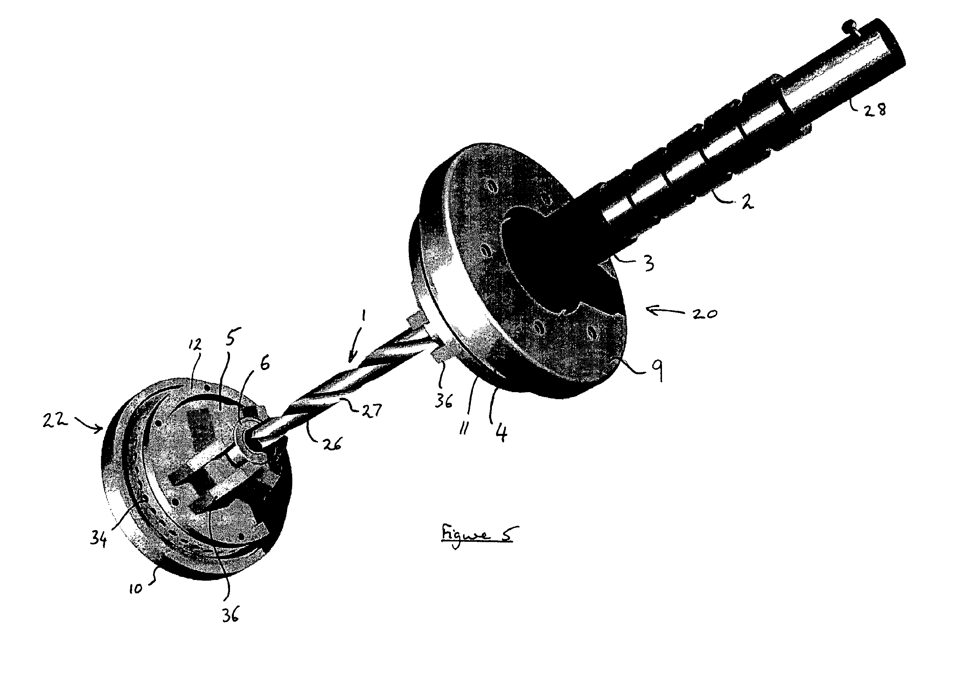

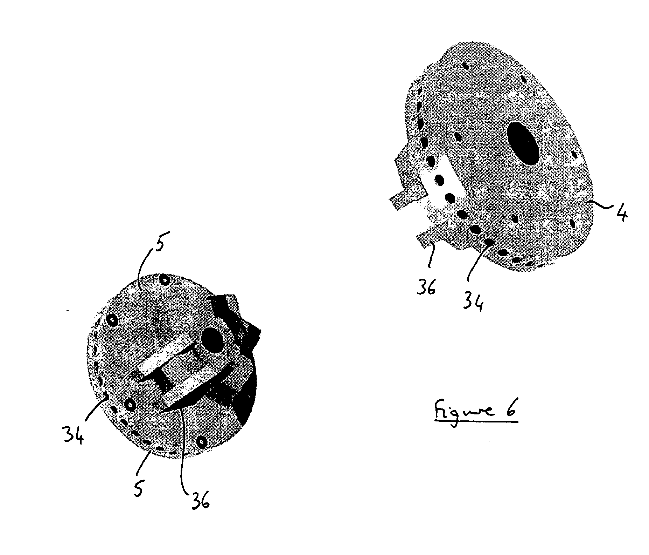

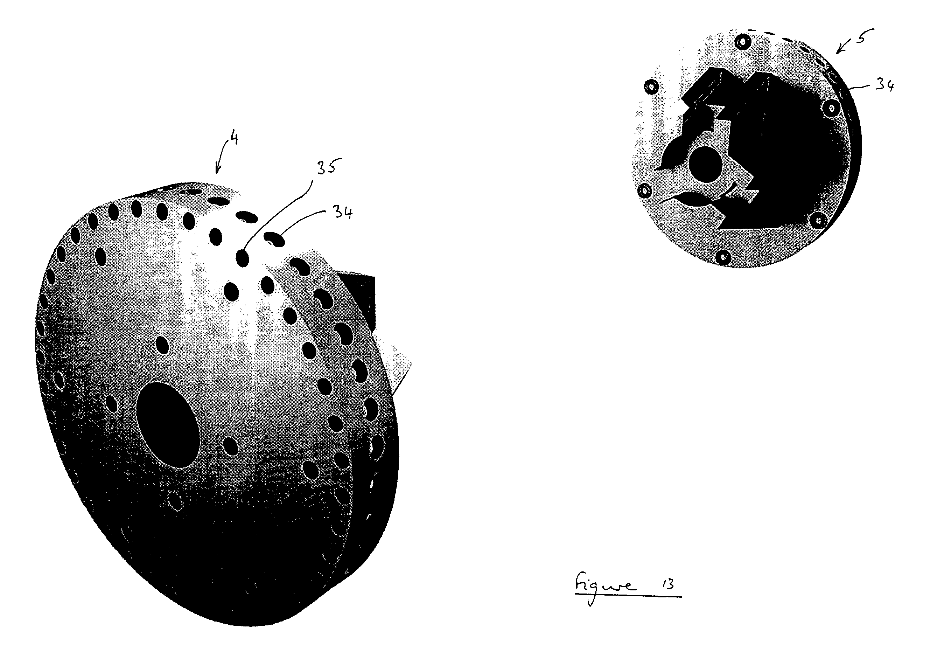

The cylinder 3 has a flange 32 at one end that is secured to a circular connector 4 by means of screws (see Figure 5) that pass through the flange 32 and engage in screw holes (not visible in Figure 1 and 6) in the connector 4. The connector 4 includes thirty eight equally spaced socket holes 34 around a cylindrical outer face. The socket holes 34 together accommodate one end of each of the hoops 7 that together form the cage 24. The ends of the hoops are secured in the holes by bolts (not visible) that are present in an array of holes 35 (see Figure 13) positioned on the external side of the connector 4, the bolts engaging the hoops perpendicularly. The connector 4 may be made of a tough plastic material such as POM or metal, for example steel.

The internal side of the connector 4, i.e. the side facing the cage 24, is provided with arms 36 (see Figures 1, 5 and 6) that define between them a recess that holds a bearing 6. On the opposite side of the cage 24, there is a second connector 5 having an identical construction to the connector 4. In other words, connector 5 has thirty eight socket holes 34 provided around a cylindrical outer surface, into which the other ends of the hoops 7 are secured in the same manner as described above. In the same way, the connector 5 has arms 36 that provide a recess for holding a further bearing 6'. The rod, which is rotatable on the bearings, passes through bearing 6 and the helically grooved end of the rod 1 is retained in the bearing 6'. The end of the rod 1 is fixed to the inner part of the bearing 6' by means of a simple locker steel ring (not shown). The bearings 6 and 6'are held captive within the connectors 4,5 by means of three bolts equally positioned around the outer part of the bearings 6,6' in arms 36 of the connectors.

Rings 9 and 10, which are made of metal, e.g. steel, are secured to the connectors 4,5 via bolts passing though holes in the external rings 9, 10 and secured in corresponding blind threaded holes in the connectors 4, 5. Internal rings 11,12 are likewise secured via bolts to the inside faces of the connector 4, 5. When the wheel is in use supporting the weight of a vehicle, and especially when the vehicle is moving, the hoops exert a large lateral load on the side walls of the thirty eight equally spaced socket holes 34. The rings 9, 10, 11 and 12 provide reinforcement to the connectors 4,5 and assist in avoiding breakage of the holes 34 by these large lateral forces. In addition, they provide a clamping arrangement for securing an internal inflatable bag 13, which fits within the cage 24 and whose ends are clamped between the ring 11 and the connector 4, at one end of the bag, and between the ring 12 and the connector 5, at the other end. To assist in the clamping, the two mouths at either end of the inflatable bag 13 are secured to bag rings 14, 15 and it is the bag rings 14, 15 that are clamped between the internal rings 11,12 and their respective connectors 4, 5, thereby providing a gas-tight seal around the two mouths of the inflatable bag 13.

The inner inflatable bag 13 is provided to protect the rod 1 from dirt or other debris and also to improve the wheel's performance when under an extra heavy load, once inflated; this improvement in performance under a heavy load is brought about because the inflation can minimise the motion resistance. Also the bag supports the hoops if subject to a high pressure that, without the bag 13, would lead to excessive deformation of the hoops. The bag 13 can be inflated by air introduced via a valve (not shown). The bag 13 can also provide buoyancy for amphibious vehicles. Instead of the inflatable bag 13, a hollow cylindrical casing can be used to enclose the rod 1.

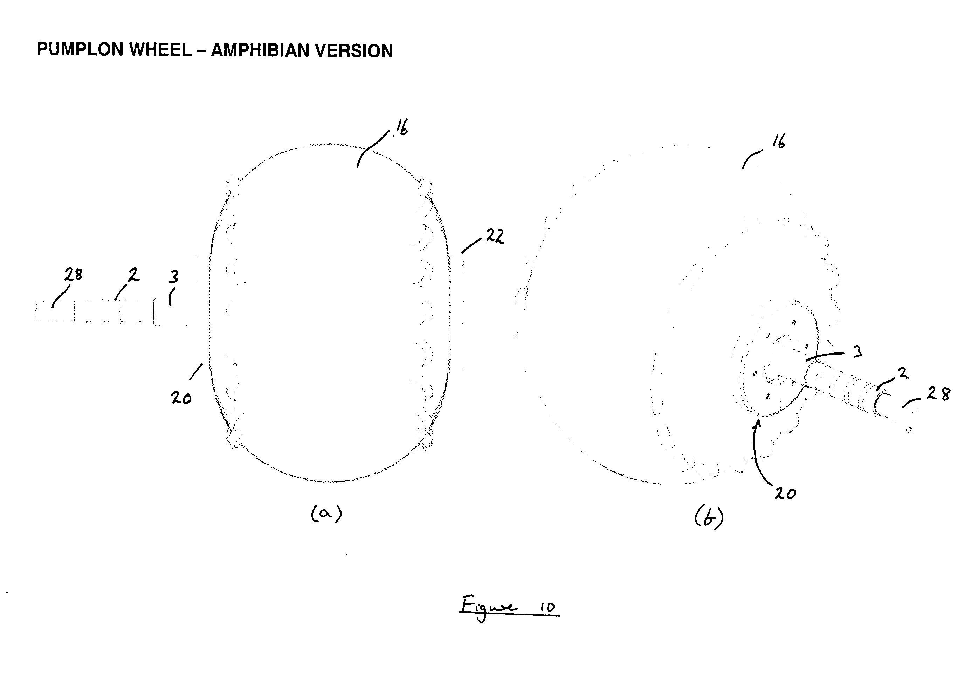

An external stretchable covering 16 can be placed outside the cage 24 and the two mouths of the covering may be clamped between the rings 9, 10 and their respective connectors 4, 5. A wheel including such a stretchable covering is shown in Figures 10a and 10b. The external stretchable cover 16 is used to provide buoyancy to the wheel when used in connection with an amphibious vehicle. It will adapt to the shape of the cage 24 when the shape of the wheel is altered, as described below, without the necessity of being inflated. Both the internal bag 13 and the external cover 16 may be used.

A series of spacer elements 8 are provided on alternate hoops 7 to keep the hoops separate and prevent them from becoming entangled with each other.

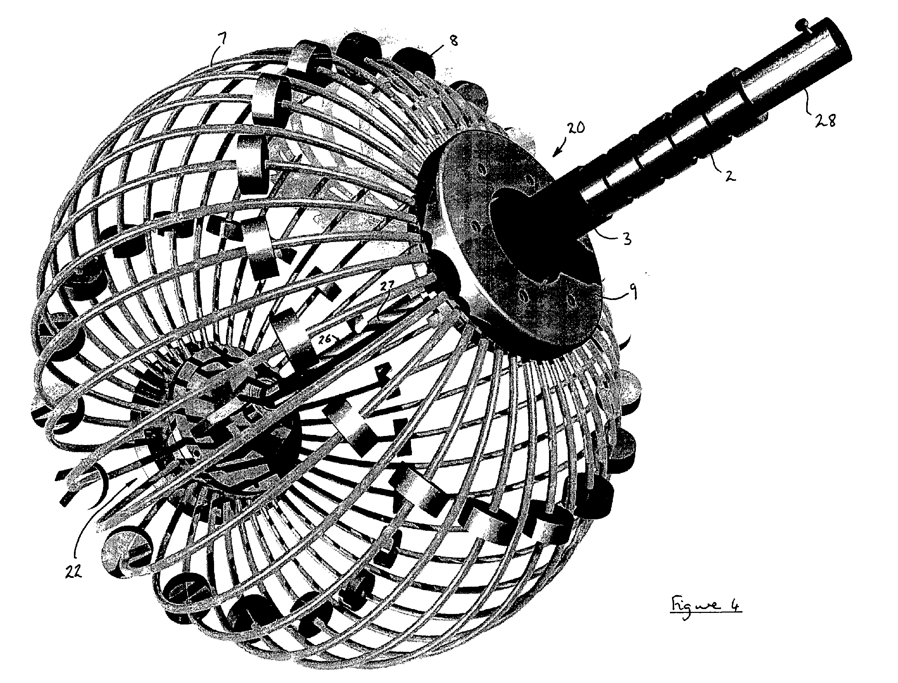

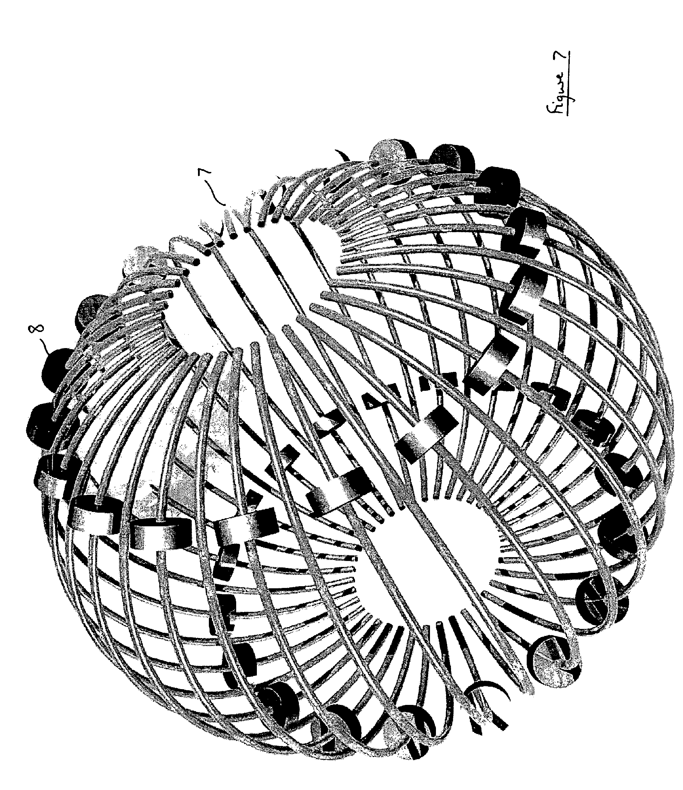

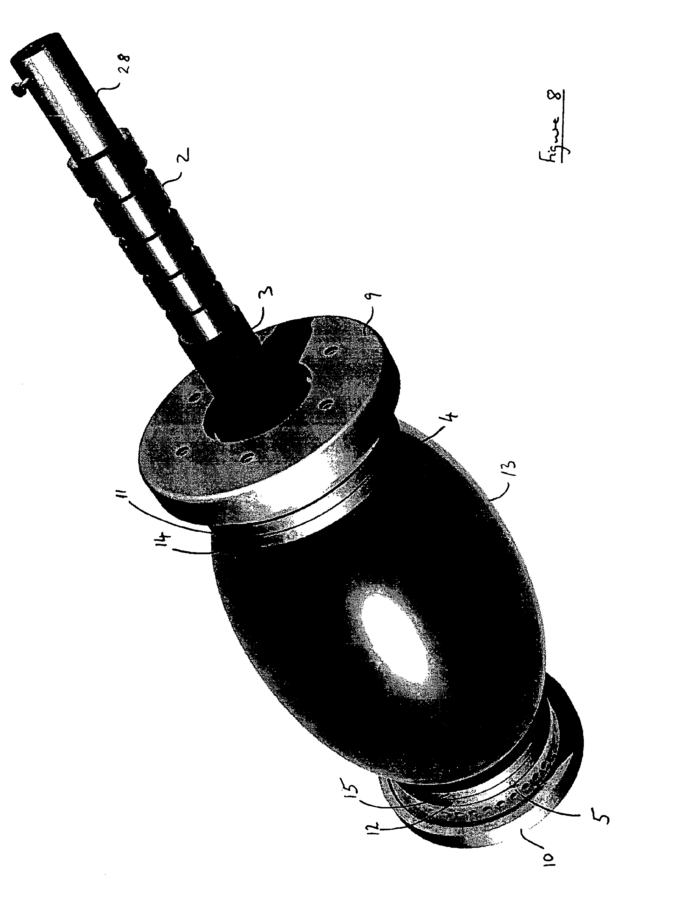

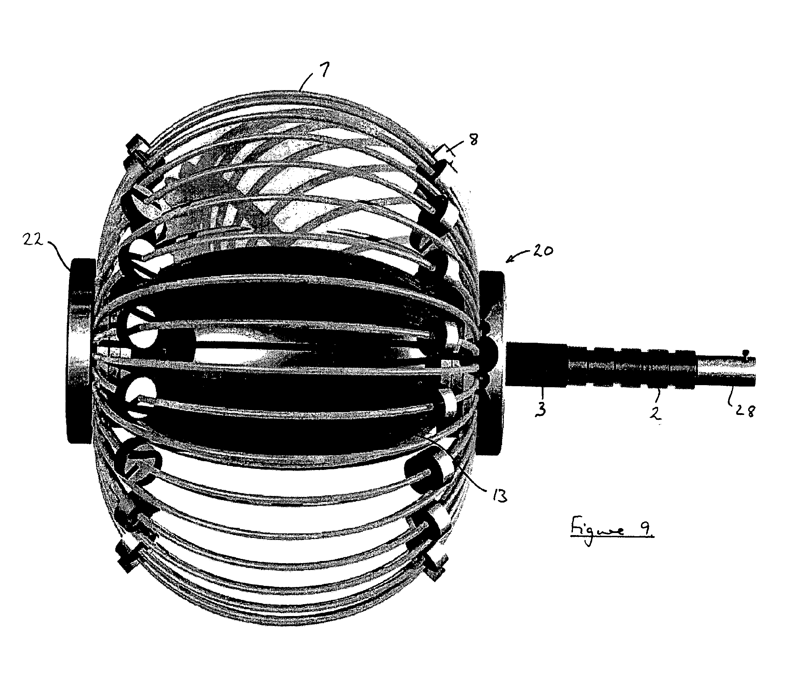

Figure 4 shows the completed wheel in perspective, while Figure 5 shows the wheel without the cage 24. Further details of the two connectors 4,5 are shown in Figure 6 while the cage itself is shown in Figure 7. Figure 8 shows the wheel without the cage but including the internal bag 13, which is shown partially inflated. Figure 9 shows the wheel of Figure 8 but with the cage 24 and Figure 10 shows the wheel covered by the covering 16.

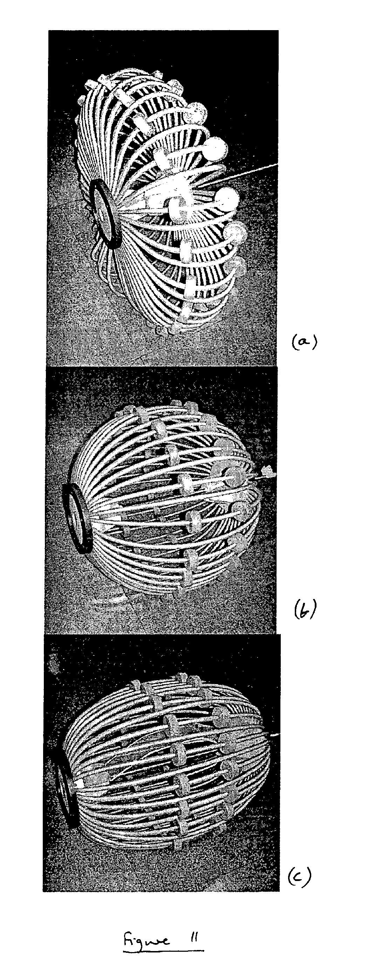

In use, the diameter and width of the wheel can be changed, as shown in Figures 11, a, b and c. Figure 11a shows the wheel with the largest diameter but narrowest width and Figure 11c shows the wheel with the smallest diameter and the largest width. Figure 11b shows the wheel in an intermediary position. The change of diameter can be brought about by turning the rod 1 within the bearings 6,6' relative to the rest of the wheel. If one starts with the arrangement shown in Figure 11c, turning the rod causes the cylinder 3 provided with ball bearings in its internal bore 30 to move axially along the rod 1 towards the cage 24 as a result of the engagement of the internal ball bearings within the helical grooves 27 in section 26 of the rod 1. The cylinder does not twist as it does so because of its connection to the cage 24 via the connector 4. As the cylinder 3 moves axially along the rod 1, it pushes the connector 4 in the same direction. Because the connector 5 does not move along the rod, the action of turning the rod within the bearings 6 causes the separation between the connectors 4 and 5 to be reduced, which causes the hoops 7 to flex and adopt a more arched profile, thereby increasing the diameter of the wheel and reducing its width. Turning the rod in the opposite direction increases the separation between the connectors 4,5 and increases the width of the wheel.

The rod 1 can be remotely rotated by means of an assembly that includes an electric motor and a gear box; the assembly may be attached to the rod 1 at its stop end 28. A clutch arrangement (or other manner of breaking and forming the drive between the rod 1 and the gearbox) can be interposed between the rod 1 and the motor/gearbox so that the rod can be decoupled from the motor/gearbox while the vehicle is in motion, and coupled to the motor/gearbox while the diameter/width of the wheel is being changed. It will be appreciated that the rod 1 rotates with the rest of the wheel when the vehicle is in motion, Therefore, it is possible to change the diameter/width of the wheel in accordance with the present invention while the wheel is still fitted to a vehicle. If the hub part 20 is moved along the rod 1 by another mechanism, e.g. a pneumatic or hydraulic ram, then it would be possible to change the diameter/width of the wheel while it is still moving.

The wheel may be attached to the end of an axle of a vehicle in a large number of alternative ways, for example through an adapter (not shown) that is attached to, or integral with, the disc 9 or 10. This adapter would be attached both to the vehicle axle, for example by bolts such as those customarily used to attach car tyres to car axles. The adaptor may be of a hollow rounded shape to accommodate the end 28 of the rod 1, the spacer cylinder 2 and the bored cylinder 3 and optionally a mechanism for turning the rod, e.g. a flat upright gear.

When the wheel has a relatively small diameter and a relatively great width, the area of the wheel that is in contact with the ground (which will be referred to as the "footprint" of the wheel) is greater than is the case when the diameter of the wheel is relatively large and the width is relatively small. The greater the area of the footprint, the smaller is the pressure exerted by the wheel on the ground. Accordingly, in ground that tends to yield, e.g. waterlogged ground, sand or broken-up soil, it is advantageous to use the wider/smaller diameter configuration, which prevents the wheel sinking into the ground and/or minimises the compaction caused by the wheel. However, on hard ground, where the wheel will not readily sink in, either the large diameter/small width configuration or the small diameter/large width configuration could be used (or any intermediate diameter/width). When moving over different terrains, it is possible to change the diameter of the wheel without stopping to fit new wheels.

The change of diameter of the wheel will also affect the ability of the wheel to grip the ground and therefore affects the drive that is able to be transmitted through the wheel. Thus on steep hills or muddy/slippery surfaces, a large footprint is desirable to increase the drive of the wheel and decrease slippage, which can be achieved by increasing the width of the wheel and reducing the diameter.

The change of the diameter of a driven wheel will obviously affect the speed of the vehicle, for a given engine speed and gear box setting. Thus, the smallest diameter wheel will tend to drive the vehicle at a slower speed than the largest diameter wheel. In addition, the larger diameter wheel is likely to provide lower fuel usage.

As a result of its larger footprint, the smaller diameter/wider wheel will tend to dig into broken ground less than the larger diameter wheel and this will reduce its tendency to "plough" into the ground and therefore reduce its resistance in rolling over the ground.

The wheel of the present invention finds particular application for agricultural transportation or in other applications in which a vehicle moves over open ground and off road driving.

It can be attached either to a driven axle or shaft of a vehicle or to a non-driven axle or shaft, i.e. it is an idling wheel. The idling wheel can either be part of a self-propelled vehicle or a non-self propelled vehicle e.g. a trailer.

The wheels of the present invention can form all or only some of the wheels of the vehicle.

Two or more wheels in accordance with the present invention could be attached side by side along the same axle or shaft, thereby increasing the thrust achievable by the wheel and halving the pressure exerted by the wheel on the ground. The wheels can be operated independently and adopt different configuration. For example, one could be of a relatively large width/small diameter while the other could be of a relatively small width and large diameter. Such an arrangement will improve the thrust and decrease the slippage provided by the wheel having the relatively large diameter while, at the same time, improving the weight distribution through the smaller diameter/larger width wheel.

The present invention can also be applied to track vehicles such that the track passes around one or more of the wheels of the present invention. In this case, the speed of the vehicle can be altered by changing the diameter of a wheel of the present invention when acting as a track drive wheel.

In the embodiment shown in Figure 11, the width of the wheel at its maximum can be approximately three times the width at its minimum.

The arrangement depicted in Figures 1 to 11 and 13 using hoops is particularly advantageous in muddy soil that is slippery, since the hoops can sink into the surface mud and engage relatively hard soil below the surface, which allows the wheel as a whole to grip the ground and prevents the wheel from slipping, and therefore reduces the churning effect of the wheel on the ground that creates further mud. It is also advantageous for use on un-compacted soil, for example, soil that has just been ploughed, harrowed or otherwise conditioned, since the hoops will again penetrate the ground without compacting all the soil over which the wheel passes.

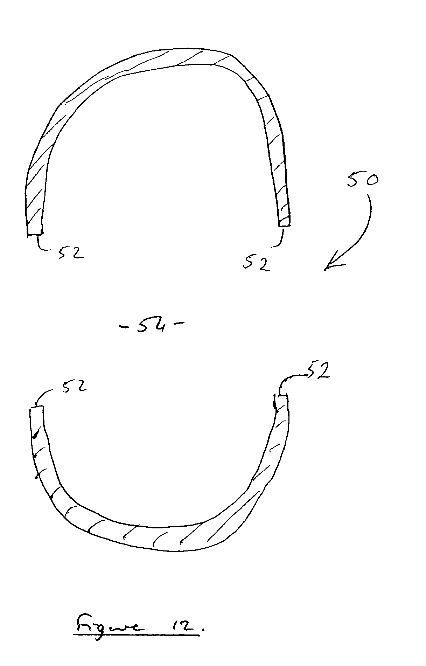

The hoops can be replaced by a single hollow tyre of annular shape. In this case, as shown in Figure 12, the inner rim 52 can be clamped to the hubs 20,22. Such a tyre can be formed, for example by embedding the hoops 7 in a flexible material, for example, hardened rubber. The tyre may be inflatable internally, in which case the internal cavity may be sealed or an inflatable inner tube may be provided, if necessary. Alternatively, the tyre may be sufficiently resilient to support the weight of the vehicle without internal pneumatic pressure.

## Claims

1. A wheel of variable diameter and width for a vehicle, the wheel having an axis of rotation and comprising:
a rim,
a hub configured for attachment to an axle or shaft, the hub comprising a first part and a second part that are both arranged on the said rotational axis, and
at least one arching member having first and second ends and being connected at the first end to the first hub part and at the second end to the second hub part, wherein the arching member extends outwardly in an arc between the first and second hub members and forms or supports the wheel rim,
wherein the first and second hub parts can be moved relative to each other to change the shape of the arc of the at least one arching member, and wherein the two hub parts are lockable in a fixed position relative to each other.

2. A vehicle wheel as claimed in claim 1, wherein the at least one arching members comprises a plurality of flexible hoops spaced around the hub and extending radially outward from the hub.

3. A vehicle wheel as claimed in claim 2, which includes an outer covering that overlies the said hoops and that is deformable to adopt the shape outlined by the hoops.

4. A vehicle wheel as claimed in claim 2 or claim 3, which includes an inflated or inflatable container located within the confines of the arching members, wherein the container is sealed and can be pneumatically inflated.

5. A vehicle wheel as claimed in claim 1, wherein the at least one arching member comprises a hollow annular flexible tyre having a central opening defined by two internal rims forming the said two ends of the arching member, and wherein the first and second hub parts are each connected to one of the internal rims.

6. A vehicle wheel as claimed in claim 5, wherein the tyre is sealed and can be pneumatically inflated.

7. A vehicle wheel as claimed in any preceding claim, wherein the first and second hub parts are movable with respect to each other in a direction along the said axis of rotation of the wheel.

8. A vehicle wheel as claimed in any preceding claim, which includes a rod and wherein at least one of the hub parts is movable along the rod.

9. A vehicle wheel as claimed in claim 8, wherein the rod has a screw thread and wherein the said at least one movable hub part is engaged on the screw thread so that, as the rod is turned, the said at least one movable hub part is driven along the rod.

10. A vehicle wheel as claimed in preceding claim, wherein one of the first and second hub parts is in a fixed location and the other is movable to change the diameter and width of the wheel.
